# EUROPEAN PATENT APPLICATION

(11) **EP 4 478 783 A1**
(43) Date of publication of application: **18.12.2024**
(21) Application number: 22925945.2
(22) Date of filing: 10.02.2022
(51) Int. Cl.: H04W 36/08, H04W 72/04

(54) **USER EQUIPMENT AND WIRELESS BASE STATION**

(71) Applicant: NTT DOCOMO, INC., Chiyoda-ku Tokyo 100-6150 (JP)
(72) Inventor: WATANABE, Souki, Tokyo 100-6150 (JP); MIN, Tianyang, Tokyo 100-6150 (JP)
(74) Representative: Hoffmann Eitle
(86) International application number: PCT/JP2022/005498
(87) International publication number: WO 2023/152924

(57) **Abstract**

A terminal receives, from a first radio base station constituting a master node, a first message including a first configuration number of a secondary cell according to a change procedure of the secondary cell, and receives, from a second radio base station constituting a secondary node, a second message including a second configuration number of the secondary cell according to the change procedure. The terminal performs the change procedure such that a configuration number of the secondary cell according to the change procedure is equal to or less than the maximum number of cells for the change procedure.

## Description

### TECHNICAL FIELD

The present disclosure relates to a terminal and a radio base station supporting a change procedure of a secondary cell (secondary node).

### BACKGROUND ART

The 3rd Generation Partnership Project (3GPP) has prepared a specification for the 5th generation mobile communication system (also referred to as 5G, New Radio (NR), or Next Generation (NG)), and further a specification for a next-generation system referred to as Beyond 5G, 5G Evolution, or 6G is also being prepared.

For example, in Release-17 of 3GPP, a simplified conditional PSCell (secondary node) addition/change procedure (CPAC: conditional PSCell addition/change) is considered to be supported in order to achieve more efficient primary SCell (PSCell) addition/change. In a conditional PSCell addition/change, it is possible to specify an execution condition for a terminal (User Equipment, UE) to determine whether a PSCell can be added/changed.

If this kind of CPAC is supported in Release-17, there is a possibility that both a conditional PSCell change according to Release-17 (Rel-17 CPC) and a conditional PSCell change according to Release-16 (Rel-16 CPC) coexist (Non-Patent Literature 1).

### CITATION LIST

### NON-PATENT LITERATURE

Non-Patent Literature 1: "Open issues for MR DC/CA further enhancements", R2-2202029, 3GPP TSG-RAN WG2#116bis-e, 3GPP, January 2022

### SUMMARY OF THE INVENTION

When the Rel-17 CPC and Rel-16 CPC coexist, if one of the CPCs is performed without considering a state of the other of the CPCs in a radio base station, a problem may be caused in which a CPC which is more than the maximum number of cells of conditional secondary cells (SCells) that can be configured by the UE and which may not be actually supported by the UE is configured.

The following disclosure has been made in view of such a situation and an object of the present invention is to provide a terminal and a radio base station capable of normally performing a CPC even when a Rel-17 CPC and Rel-16 CPC coexist.

An aspect of the present disclosure provides a terminal (UE 200) including: a control unit (control unit 240) that controls execution of a change procedure of a secondary cell; and a receiving unit (RRC processing unit 220) that receives, from a first radio base station (eNB 100A, gNB 100B) constituting a master node, a first message including a first configuration number of the secondary cell according to the change procedure, and receives, from a second radio base station (eNB 100A, gNB 100B) constituting a secondary node, a second message including a second configuration number of the secondary cell according to the change procedure, in which the control unit performs the change procedure such that a configuration number of the secondary cell according to the change procedure is equal to or less than the maximum number of cells for the change procedure.

An aspect of the present disclosure provides a radio base station (eNB 100A, gNB 100B) including: a control unit (control unit 140) that controls execution of a change procedure of a secondary cell; and a transmitting unit (RRC/Xn processing unit 120) that transmits, to another radio base station constituting a master node, a message including a configuration preparation number of the secondary cell according to the change procedure, in which the control unit determines the configuration preparation number based on a configuration number of the secondary cell according to the change procedure of a specific release and a configuration number of the secondary cell according to the change procedure of a release other than the specific release.

### BRIEF DESCRIPTION OF THE DRAWINGS

[FIG. 1] Fig. 1 is an overall schematic configuration diagram of a radio communication system 10.
[FIG. 2] Fig. 2 is a functional block diagram of an eNB 100A and gNB 100B.
[FIG. 3] Fig. 3 is a functional block diagram of a UE 200.
[FIG. 4] Fig. 4 is a diagram showing an example of an SN-initiated conditional PSCell change according to Operation Example 1.
[FIG. 5] Fig. 5 is a diagram showing an example of an SN-initiated conditional PSCell change according to Operation Example 2.
[FIG. 6] Fig. 6 is a diagram showing an example of an MN-initiated conditional PSCell change according to Operation Example 2.
[FIG. 7] Fig. 7 is a diagram showing an example of a hardware configuration of the eNB 100A, gNB 100B and UE 200.
[FIG. 8] Fig. 8 is a diagram showing a configuration example of a vehicle 2001.

### DESCRIPTION OF EMBODIMENT

An embodiment will be explained below with reference to the accompanying drawings. Note that the same or similar reference numerals have been attached to the same functions and configurations, and the description thereof will be omitted as appropriate.

### (1) Overall schematic configuration of radio communication system

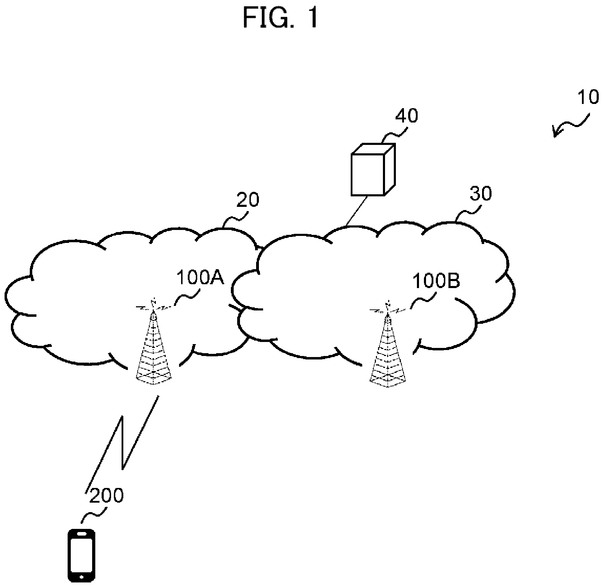

Fig. 1 is an overall schematic configuration diagram of a radio communication system 10 according to the present embodiment. The radio communication system 10 is compliant with Long Term Evolution (LTE) and 5G New Radio (NR). LTE may be referred to as 4G and NR may be referred to as 5G. Further, the radio communication system 10 may be compliant with a method referred to as Beyond 5G, 5G Evolution, or 6G.

LTE and NR may be interpreted as radio access technology (RAT), and in the present embodiment, LTE may be referred to as first radio access technology and NR may be referred to as second radio access technology.

The radio communication system 10 includes an Evolved Universal Terrestrial Radio Access Network 20 (hereinafter referred to as "E-UTRAN 20") and a Next Generation-Radio Access Network 30 (hereinafter referred to as "NG-RAN 30"). Further, the radio communication system 10 includes a terminal 200 (hereinafter referred to as "UE 200", User Equipment).

The E-UTRAN 20 includes an eNB 100A, which is a radio base station that is compliant with LTE. The NG-RAN 30 includes a gNB 100B, which is a radio base station that is compliant with 5G (NR). Further, the NG-RAN 30 may be connected to a User Plane Function (UPF 40) that is included in a system architecture of 5G and provides user plane functions.

The E-UTRAN 20 and NG-RAN 30 (may be eNB 100A or gNB 100B) may simply be referred to as a network. Further, a specific configuration of the radio communication system 10 including the number of eNBs, gNBs, and UEs is not limited to an example shown in Fig. 1.

The eNB 100A, gNB 100B, and UE 200 can support carrier aggregation (CA) in which a plurality of component carriers (CCs) are used, and Dual Connectivity in which component carriers are transmitted simultaneously between a plurality of NG-RAN Nodes and the UE.

The eNB 100A, gNB 100B, and UE 200 perform radio communication via a radio bearer, specifically a Signaling Radio Bearer (SRB) or DRB Data radio bearer (DRB).

In the present embodiment, Multi-Radio Dual Connectivity (MR-DC) may be performed, in which the eNB 100A constitutes a master node (MN) and the gNB 100B constitutes a secondary node (SN), specifically E-UTRA-NR Dual Connectivity (EN-DC), or NR-E-UTRA Dual Connectivity (NE-DC) may be performed, in which the gNB 100B constitutes the MN and the eNB 100A constitutes the SN. Alternatively, NR-NR Dual Connectivity (NR-DC) may be performed, in which the gNB constitutes the MN and SN.

In this way, the UE 200 supports Dual Connectivity with the eNB 100A and gNB 100B.

The eNB 100A may be included in a master cell group (MCG) and the gNB 100B may be included in a secondary cell group (SCG). That is, the gNB 100B is an SN included in the SCG. Further, the eNB 100A (MN) may constitute a first radio base station, and the gNB 100B (SN) may constitute a second radio base station. As described above, the NE-DC or the like may be adopted, the gNB 100B may be an MN, and the eNB 100A may be an SN, for example.

The eNB 100A and gNB 100B may be referred to as radio base stations or network devices.

Further, in the radio communication system 10, conditional addition/change of the Primary SCell (PSCell) (conditional PSCell addition/change) may be supported. The PSCell is a type of a secondary cell. The PSCell means a Primary SCell (secondary cell) and may be interpreted as corresponding to any one of a plurality of SCells.

The secondary cell may be read as a secondary node (SN) or a secondary cell group (SCG). By means of the conditional PSCell addition/change, it is possible to realize efficient and rapid addition or change of a secondary cell.

The conditional PSCell addition/change may be interpreted as a conditional secondary cell addition/change procedure with a simplified procedure. Further, the conditional PSCell addition/change may mean at least either an SCell addition or an SCell change.

Further, in the radio communication system 10, a conditional SN-to-SN PSCell change procedure may be supported. Specifically, an MN-initiated conditional PSCell change initiated by an MN and/or an SN-initiated conditional PSCell change initiated by an SN may be supported.

Further, in the radio communication system 10, as a conditional PSCell change (CPC), an SN-initiated inter-SN CPC procedure which is an SN-to-SN CPC initiated by an SN and/or an SN-initiated intra-SN CPC procedure which is a CPC in the same SN may be supported. In the SN-initiated inter-SN CPC procedure, a procedure for an MN to generate a CPC before transmitting an SN change confirm, and a procedure for an MN to generate a CPC after transmitting an SN change confirm may be specified.

Further, in the radio communication system 10, both a conditional PSCell change according to Release-17 (Rel-17 CPC) and a conditional PSCell change according to Release-16 (Rel-16 CPC) may coexist. Specifically, both a PSCell change procedure according to the Rel-17 CPC and a PSCell change procedure according to the Rel-16 CPC may be applied simultaneously. The main difference between the Rel-17 CPC and Rel-16 CPC is in that in the Rel-16 CPC, only the SN-initiated conditional PSCell change is supported, while in the Rel-17 CPC, the MN-initiated conditional PSCell change may be also supported. However, this kind of difference is merely an example, and there may be more differences between the Rel-17 CPC and Rel-16 CPC.

### (2) Functional block configuration of radio communication system

Next, a functional block configuration of the radio communication system 10 will be described. Specifically, functional block configurations of the eNB 100A, gNB 100B, and UE 200 will be described.

### (2.1) eNB 100A and gNB 100B

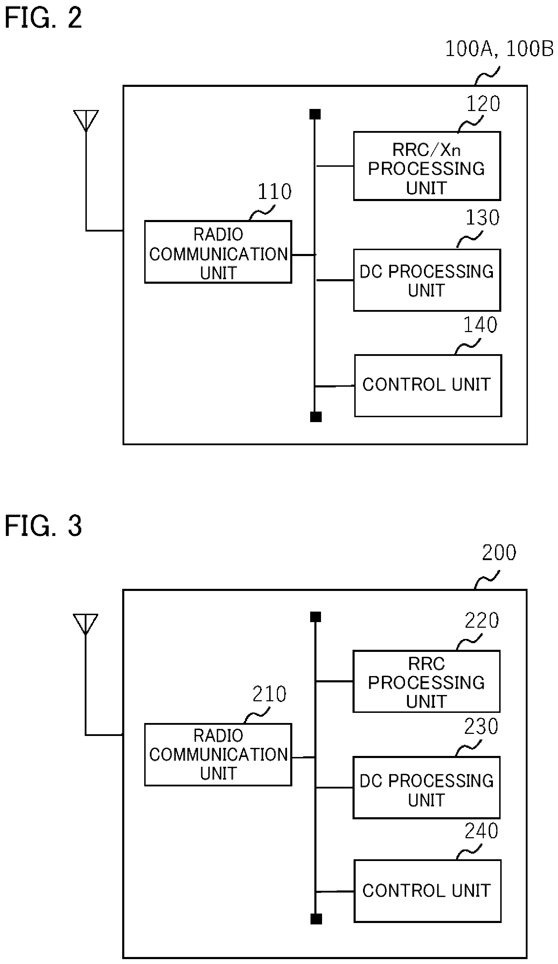

Fig. 2 is a functional block diagram of the eNB 100A and gNB 100B. As shown in Fig. 2, the eNB 100A and gNB 100B include a radio communication unit 110, an RRC/Xn processing unit 120, a DC processing unit 130, and a control unit 140.

The radio communication unit 110 transmits a downlink signal (DL signal) in accordance with a predetermined radio method (LTE or NR). Further, the radio communication unit 110 receives an uplink signal (UL signal) in accordance with a predetermined radio method (LTE or NR).

The RRC/Xn processing unit 120 performs various processing related to a radio resource control layer (RRC) and an Xn interface. Specifically, the RRC/Xn processing unit 120 can transmit an RRC Reconfiguration to the UE 200. Further, the RRC/Xn processing unit 120 can receive, from the UE 200, RRC Reconfiguration Complete, which is a response to the RRC Reconfiguration.

The eNB 100A supports LTE in the present embodiment, but in this case, the name of the RRC message may be RRC Connection Reconfiguration or RRC Connection Reconfiguration Complete.

Further, in the case of a radio base station supporting LTE (Evolved Universal Terrestrial Radio Access Network (E-UTRAN)), an X2 interface may be used instead of Xn. Alternatively, the Xn and X2 interface may be used in combination. The Xn interface will be described below as an example.

The RRC/Xn processing unit 120 can transmit and receive an inter-node message via the Xn interface. When the RRC/Xn processing unit 120 constitutes a secondary node (SN), the RRC/Xn processing unit 120 may receive a message related to an SCell (may include PSCell, hereinafter the same) from another radio base station, specifically, a master node (MN), for example.

More specifically, the RRC/Xn processing unit 120 may receive a message including an SN change confirm from the MN.

Further, when the RRC/Xn processing unit 120 receives the message, the RRC/Xn processing unit 120 may follow an SCell addition/change procedure, specifically, the RRC/Xn processing unit 120 may transmit, to the MN, a message including update information on an execution condition of the conditional PSCell addition/change in the SCell addition/change procedure.

More specifically, the RRC/Xn processing unit 120 may transmit an SN modification required or SN change required to the MN. The RRC/Xn processing unit 120 may transmit, to the MN, a newly specified message (new message) instead of the SN modification required or SN change required.

The RRC/Xn processing unit 120 may receive an SN modification confirm from the MN after transmitting the SN modification required or SN change required to the MN. An RRC Reconfiguration Complete message may be embedded in the SN modification confirm.

Further, the RRC/Xn processing unit 120 forming the SN constituting a source secondary node (S-SN) may transmit an SN Status Transfer to a target secondary node (T-SN).

The SN Status Transfer may include a count value of a first downlink (DL) Service Data Unit (SDU), which is transferred to the T-SN by the S-SN, or a count value for discarding a DL SDU which has already been transferred in each data radio bearer (DRB). A Protocol Data Unit (PDU) may be used instead of an SDU.

The RRC/Xn processing unit 120 forming the SN constituting the S-SN may transmit (transfer) the SN Status Transfer to the T-SN via the MN. Alternatively, the RRC/Xn processing unit 120 forming the SN constituting the S-SN may transmit the SN Status Transfer directly to the T-SN not via the MN, or may transmit the SN Status Transfer to both of the MN and T-SN in parallel.

Further, the RRC/Xn processing unit 120 forming the SN constituting the S-SN may transmit, to another radio base station constituting the MN, a message including the configuration preparation number of SCells (specifically, PSCells) according to the conditional PSCell change. In the present embodiment, the RRC/Xn processing unit 120 may constitute a transmitting unit.

Specifically, the RRC/Xn processing unit 120 forming the SN constituting the S-SN can transmit, to the MN, the SN change required including the Maximum Number of PSCells To Prepare (configuration preparation number). The Maximum Number of PSCells To Prepare is specified in 3GPP TS38.423.

A value of the Maximum Number of PSCells To Prepare may be determined based on the operation according to the Rel-17 CPC and Rel-16 CPC. The Maximum Number of PSCells To Prepare (configuration preparation number) may be interpreted as the number of PSCells that can be configured for the Rel-17 CPC if configuration according to the Rel-16 CPC has been performed previously. Meanwhile, the Maximum Number of PSCells To Prepare (configuration preparation number) may be interpreted as the number of PSCells that can be configured for the Rel-16 CPC if configuration according to the Rel-17 CPC has been performed previously.

Meanwhile, when the RRC/Xn processing unit 120 constitutes the MN, the RRC/Xn processing unit 120 may receive a SCell addition/change message from the SN. The RRC/Xn processing unit 120 may receive a SCell addition message and a SCell change message individually.

More specifically, the RRC/Xn processing unit 120 may receive the SN change required and/or an SN Addition Request Ack from the SN.

The DC processing unit 130 performs processing related to dual connectivity, specifically, Multi-RAT Dual Connectivity (MR-DC). In the present embodiment, the eNB 100A supports LTE and the gNB 100B supports NR, and therefore the DC processing unit 130 may perform processing related to E-UTRA-NR Dual Connectivity (EN-DC). A type of DC is not limited as described above, and for example, NR-E-UTRA Dual Connectivity (NE-DC) or NR-NR Dual Connectivity (NR-DC) may be supported.

The DC processing unit 130 transmits and receives messages specified in 3GPP TS37.340 or the like, and can perform processing related to configuration and releasing of DCs among the eNB 100A, gNB 100B, and UE 200.

The control unit 140 controls each functional block constituting the eNB 100A. In particular, in the present embodiment, the control unit 140 performs control regarding addition or change of a secondary node.

The control unit 140 controls execution of the SCell addition/change procedure, in particular, the conditional PSCell addition/change. Specifically, the control unit 140 cooperates with the SN (or MN) and can perform the SCell addition or the SCell change based on an execution condition.

In the present embodiment, the control unit 140 can determine the Maximum Number of PSCells To Prepare (configuration preparation number), based on the configuration number of SCells (specifically, PSCells, hereinafter the same) according to the conditional PSCell change of a specific release (for example, Release-17) and the configuration number of SCells according to the conditional PSCell change of a release other than the specific release (for example, Release-16) .

Specifically, the control unit 140 may determine a value of the Maximum Number of PSCells To Prepare, based on the sum of the configuration number (config number) of PSCells according to the Rel-17 CPC and the configuration number (config number) of PSCells according to the Rel-16 CPC, and the number of SCells according to the conditional PSCell change that can be configured by the UE 200 (the maximum number of conditional reconfigurations), specifically, maxNrofCondCells (the maximum number of cells), which are information elements (fields) specified in the 3GPP TS38.331.

If the Rel-17 CPC is configured previously, the control unit 140 may determine the configuration number (config number) of PSCells according to the Rel-17 CPC as "X" (for example, four) and may determine the configuration (configurable) number (config number) of PSCells according to the Rel-16 CPC, which will be configured later, for example. The configuration (configurable) number of PSCells according to the Rel-16 CPC can be determined by subtracting X from a value (for example, eight) of maxNrofCondCells configured for the UE 200 (8 - 4 = 4). However, the configuration (configurable) number of PSCells according to the Rel-16 CPC may be smaller than (maxNrofCondCells - x).

In this way, the control unit 140 may determine the Maximum Number of PSCells To Prepare (configuration preparation number), based on the maxNrofCondCells, which is the maximum number of PSCells according to the conditional PSCell change in the UE 200. The maxNrofCondCells may be interpreted as the maximum number of candidate SpCells (Max number of conditional candidate SpCells) that can be configured according to the SCell addition/change procedure. The SpCell may mean a PCell and PSCell.

In the present embodiment, a channel includes a control channel and a data channel. The control channel includes a Physical Downlink Control Channel (PDCCH), a Physical Uplink Control Channel (PUCCH), a Physical Random Access Channel (PRACH), a Physical Broadcast Channel (PBCH), and the like.

Further, the data channel includes a Physical Downlink Shared Channel (PDSCH), a Physical Uplink Shared Channel (PUSCH), and the like.

A reference signal includes a Demodulation reference signal (DMRS), a Sounding Reference Signal (SRS), a Phase Tracking Reference Signal (PTRS), a Channel State Information-Reference Signal (CSI-RS), and the like, and a signal includes a channel and a reference signal. Data may mean data transmitted via a data channel.

### (2.2) UE 200

Fig. 3 is a functional block diagram of the UE 200. As shown in Fig. 3, the UE 200 includes a radio communication unit 210, an RRC processing unit 220, a DC processing unit 230, and a control unit 240.

The radio communication unit 210 transmits an uplink signal (UL signal) that is compliant with LTE or NR. Further, the radio communication unit 210 receives a downlink signal (DL signal) that is compliant with LTE or NR. That is, the UE 200 can access the eNB 100A (E-UTRAN 20) and gNB 100B (NG RAN 30) and can support dual connectivity (specifically, EN-DC).

The RRC processing unit 220 performs various processing in the radio resource control layer (RRC). Specifically, the RRC processing unit 220 can transmit and receive messages in the radio resource control layer.

In the present embodiment, the RRC processing unit 220 can receive, from a radio base station (first radio base station) constituting the master node (MN), a message (first message) including the configuration number (first configuration number) of secondary cells (specifically, PSCells) according to the conditional PSCell change (change procedure), and can receive, from a radio base station (second radio base station) constituting the secondary node (SN), a message (second message) including the configuration number (second configuration number) of secondary cells (specifically, PSCells) according to the conditional PSCell change (change procedure). In the present embodiment, the RRC processing unit 220 may constitute a receiving unit.

Specifically, the RRC processing unit 220 can receive the RRC Reconfiguration from the network, specifically, from the E-UTRAN 20 (or NG-RAN 30). The first and second messages are the RRC Reconfiguration, and the RRC Reconfiguration may include the configuration number (first configuration number and second configuration number) described above. Further, the RRC processing unit 220 can transmit, to the network, the RRC Reconfiguration Complete, which is a response to the RRC Reconfiguration. The first and second messages may be other messages of the RRC layer (for example, RRC Connection Reconfiguration (in the case of LTE)).

The DC processing unit 230 performs processing related to dual connectivity, specifically, processing related to MR-DC. As described above, in the present embodiment, the DC processing unit 230 may perform processing related to EN-DC, but may also support NE-DC and/or NR-DC.

The DC processing unit 230 can access both the eNB 100A and gNB 100B, and perform configurations in a plurality of layers including the RRC (a media access control layer (MAC), radio link control layer (RLC), packet data convergence protocol layer (PDCP), and the like).

The control unit 240 controls each functional block constituting the UE 200. In particular, in the present embodiment, the control unit 240 controls execution of the conditional PSCell addition/change.

Specifically, the control unit 240 can control execution of the conditional PSCell change (change procedure) of the secondary cell (specifically, PSCell). The control unit 240 may perform the CPC such that the configuration number of PSCells according to the conditional PSCell change (CPC) is equal to or less than the maximum number of cells for the CPC. The maximum number of cells may be a value of the maxNrofCondCells as described above. In 3GPP TS38.331, a value of "8" can be configured at a maximum as a value of the maxNrofCondCells, but a value of the maxNrofCondCells may be larger than the above value.

If the sum of the configuration number (second configuration number) of PSCells received from the SN and the configuration number (first configuration number) of cells received from the MN thereafter is more than a value of the maxNrofCondCells, the control unit 240 may configure the PSCell for only a part of the first configuration number and/or the second configuration number (that is, a part is limited), for example. The order in which the control unit 240 receives the first configuration number and the second configuration number may be reversed.

If the sum of the first configuration number and the second configuration number is equal to or less than the maximum number of cells, the control unit 240 may perform the CPC without limiting the configuration number of PSCells.

Meanwhile, when the sum of the first configuration number and the second configuration number is more than the maximum number of cells, the control unit 240 may give priority to the CPC (first configuration number) with the MN. Here, the term "priority" may mean that the configuration number of the PSCell by the CPC of the MN always takes priority irrelevant to the configuration number of the PSCell by the CPC of the SN. Alternatively, the term may mean that the configuration number of the PSCell by the CPC of the MN is larger than the configuration number of the PSCell by the CPC of the SN.

Further, the control unit 240 may monitor an execution condition of the conditional PSCell addition/change and determine whether there is a target PSCell that satisfies the execution condition. When there is a target PSCell that satisfies the execution condition, the control unit 240 may return the RRC Reconfiguration Complete to the MN in order to request the MN to perform RRC Reconfiguration of the target PSCell.

### (3) Operation of radio communication system

Next, an operation of the radio communication system 10 will be described. Specifically, a description will be given regarding an operation of the radio communication system 10 related to an addition/change procedure of a conditional secondary cell (secondary node) (conditional PSCell addition/change).

### (3.1) Assumptions and problems

In the radio communication system 10, both of the Rel-17 CPC and Rel-16 CPC may be supported. Therefore, there is a possibility that CPCs of different releases are configured simultaneously.

In the Rel-16 CPC, an SN-initiated CPC (SN-initiated conditional PSCell change) is configured only for an SN within the same SNs.

Meanwhile, in the Rel-17 CPC, an MN-initiated CPC (MN-initiated conditional PSCell change) and target PSCells that span different SNs can be configured, but in the Rel-16 CPC, this kind of function is not supported.

In the Rel-16 CPC, since the MN is not involved in the CPC, there is a problem of not being able to apprehend contents of the CPC configured by the SN. Specifically, in the MN-initiated conditional PSCell change, there is no communication between the MN and the SN before the RRC Reconfiguration is transmitted, and when the MN-initiated conditional PSCell change of Release-17 and the SN-initiated conditional PSCell change of Release-16 are configured simultaneously, it is not possible to perform coordination between the two nodes.

Therefore, when both of the Rel-16 CPC and Rel-17 CPC are supported, the Rel-16 CPC and Rel-17 CPC may be configured simultaneously, and there is a risk that the sum of the PSCell configuration number instructed to the UE 200 by the network (radio base station) may exceed capability of the UE 200 (UE capability).

### (3.2) Operation example

An operation example will be described below in which the UE 200 can perform the CPC normally even when the Rel-17 CPC and Rel-16 CPC coexist in consideration of the problems described above.

### (3.2.1) Operation Example 1

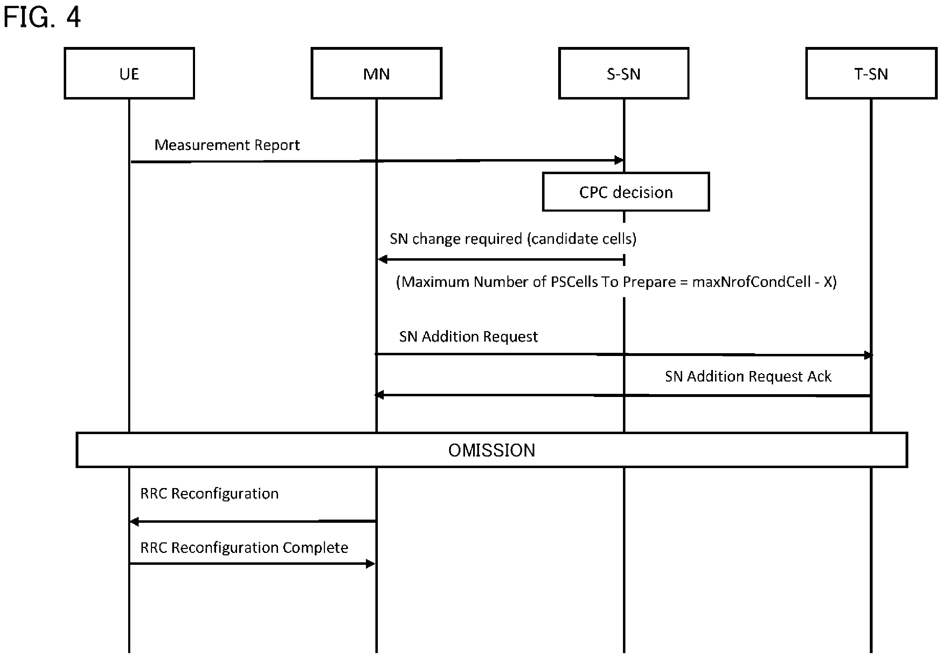

Fig. 4 shows an example of an SN-initiated conditional PSCell change according to Operation Example 1. The present operation example supports a problem in which the SN-initiated conditional PSCell change of Release-17 and the SN-initiated conditional PSCell change of Release-16 are simultaneously configured, and the configuration number of PSCells configured by both of the CPCs is more than the maxNrofCondCells (maximum number of cells) of the UE 200.

When the Rel-16 CPC is configured previously, and if the UE 200 monitors the execution condition and the Rel-17 CPC is configured for the UE 200 before the execution condition is satisfied, a problem may be caused in which the configuration number of PSCells configured by both of the CPCs is more than the UE capability. This kind of state corresponds to the "simultaneously configured" state described above, for example.

Meanwhile, after the execution condition is satisfied, the target PSCell CPC selected by the UE 200 is applied, another candidate CPC config is removed, and therefore it is not necessary to consider the Rel-16 CPC config for the number of Rel-17 CPC config at that time. Further, the radio base station may determine that the execution condition is satisfied when the RRC Reconfiguration Complete is received from the UE 200. The radio base station may use this as a basis for determining the configuration of CPCs of different releases.

As shown in Fig. 4, the S-SN determines the execution of CPC. Specifically, the S-SN determines the execution of both of the Rel-17 CPC and Rel-16 CPC.

If the Rel-16 CPC is configured earlier than the Rel-17 CPC, the S-SN may take into account the configuration number (config number = X) of PSCells by the Rel-16 CPC configured earlier, and when configuring the Rel-17 CPC, the S-SN may configure the remaining configurable number (configuration number obtained by subtracting X from maxNrofCondCells, or a value smaller than the number) as the Maximum Number of PSCells To Prepare (configuration preparation number).

As shown in Fig. 4, the Maximum Number of PSCells To Prepare may be included in the SN change required. The S-SN transmits the SN change required including the Maximum Number of PSCells To Prepare to the MN.

Similarly, if the Rel-17 CPC is configured earlier than the Rel-16 CPC, the S-SN may take into account the configuration number (config number = X) of PSCells by the Rel-17 CPC configured earlier, and when configuring the Rel-16 CPC, the S-SN may configure the remaining configurable number (configuration number obtained by subtracting X from maxNrofCondCells, or a value smaller than the number) as the Maximum Number of PSCells To Prepare (configuration preparation number).

In place of the Maximum Number of PSCells To Prepare, the configuration number (config number = X) of PSCells by a CPC configured earlier may be transmitted (notified) to the MN.

### (3.2.2) Operation Example 2

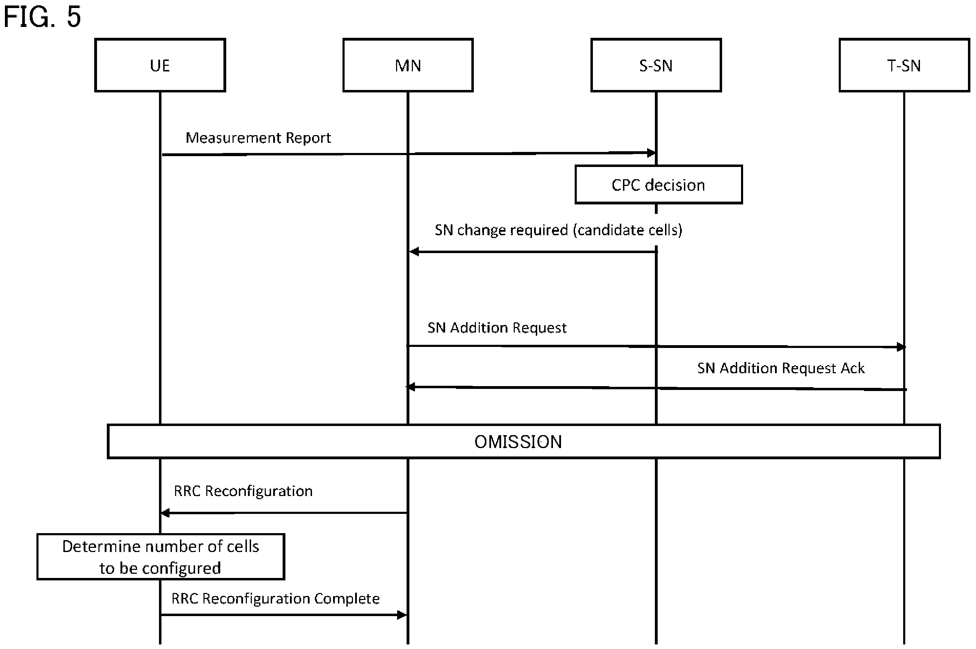

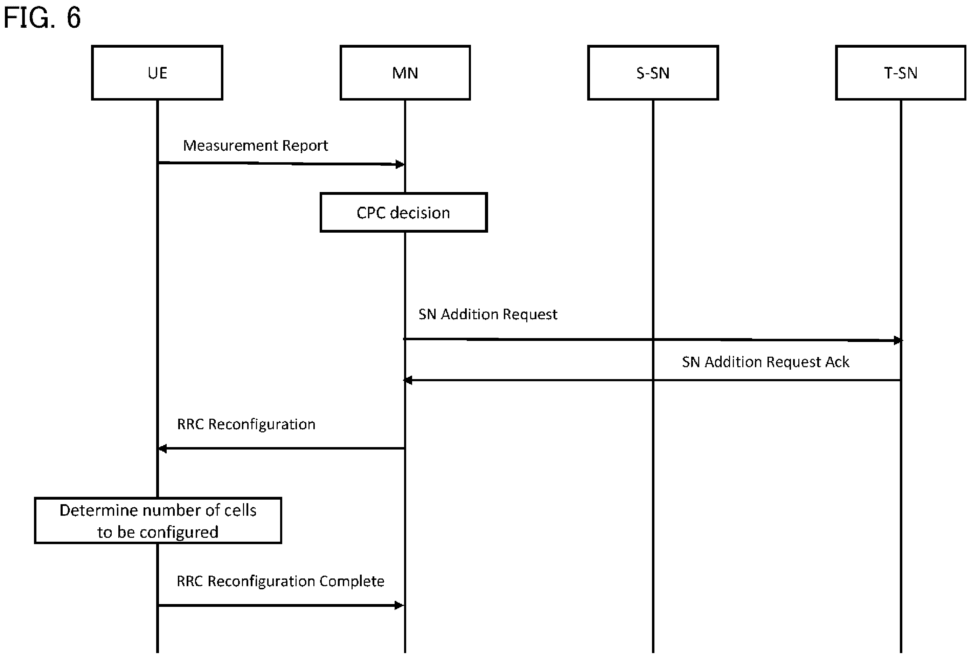

Fig. 5 shows an example of an SN-initiated conditional PSCell change according to Operation Example 2. Fig. 6 shows an example of an MN-initiated conditional PSCell change according to Operation Example 2. Specifically, Fig. 5 shows an example in which the Rel-16 CPC (SN-initiated conditional PSCell change) is configured later than the Rel-17 CPC, and Fig. 6 shows an example in which the Rel-17 CPC (MN-initiated conditional PSCell change) is configured later than the Rel-16 CPC.

The present operation example supports to a problem in which the MN-initiated conditional PSCell change of Release-17 and the SN-initiated conditional PSCell change of Release-16 are simultaneously configured, and the configuration number of PSCells configured by both of the CPCs is more than the maxNrofCondCells (maximum number of cells) of the UE 200.

As shown in Fig. 5, suppose that the UE 200 receives the configuration number (corresponding to the second configuration number) of PSCells by the Rel-16 CPC after receiving, from the MN, an RRC layer message (for example, RRC Reconfiguration) including the configuration number (corresponding to the first configuration number) of PSCells by the Rel-17 CPC. In the above case, the UE 200 may determine whether the sum of the configuration number of PSCells by the Rel-17 CPC and the configuration number of PSCells by the Rel-16 CPC is more than a value of the maxNrofCondCells, and decide the configuration number of PSCells. The determination as to whether the sum is more than the maximum value when the UE receives the Rel-16 CPC config after receiving the Rel-17 CPC config from the MN, may be made based on an assumption that the Rel-16 CPC config is received before the execution condition of the Rel-17 CPC is satisfied.

If a CPC of a different release (Rel-17 CPC) is already configured or simultaneously configured when the Rel-16 CPC is configured by the MN, the UE 200 may determine whether the number is more than the maximum number of cells of PSCells that can be configured, and if the configuration number of PSCells is more than the maximum number of cells, the UE 200 may discard the configuration of the Rel-16 CPC. Regarding discarding of the configuration of the Rel-16 CPC, a part or all of the configuration number may be discarded.

Further, as shown in Fig. 6, suppose that the UE 200 receives the configuration number (corresponding to the first configuration number) of PSCells by the Rel-17 CPC after receiving, from the MN, an RRC layer message (for example, RRC Reconfiguration) including the configuration number (corresponding to the second configuration number) of PSCells by the Rel-16 CPC. In the above case, the UE 200 may determine whether the sum of the configuration number of PSCells by the Rel-16 CPC and the configuration number of PSCells by the Rel-17 CPC is more than a value of the maxNrofCondCells, and decide the configuration number of PSCells.

The UE 200 may accept all PSCell configurations, if the sum of the configuration number of PSCells by the Rel-16 CPC and the configuration number of PSCells by the Rel-17 CPC is equal to or less than the maxNrofCondCells (maximum number of cells).

Meanwhile, the UE 200 may preferentially accept the PSCell configurations by the Rel-17 CPC, when the sum of the configuration number of PSCells by the Rel-16 CPC and the configuration number of PSCells by the Rel-17 CPC is more than the maxNrofCondCells (maximum number of cells). The UE 200 may discard PSCell configurations by the Rel-16 CPC that may not be configured.

### (4) Action and effect

According to the above embodiment, the following action and effect can be obtained. Specifically, as in Operation Example 1, the S-SN may take into account the configuration number (config number = X) of PSCells by the Rel-17 CPC configured earlier, and when the Rel-16 CPC is configured thereafter (or, when the Rel-16 CPC is configured first and then the Rel-17 CPC is configured), the S-SN may configure the remaining configurable number (configuration number obtained by subtracting X from maxNrofCondCells, or a value smaller than the number) as the Maximum Number of PSCells To Prepare (configuration preparation number).

In addition, as in Operation Example 2, when the sum of the configuration number of PSCells by the Rel-16 CPC and the configuration number of PSCells by the Rel-17 CPC is more than the maxNrofCondCells (maximum number of cells), the UE 200 may preferentially accept the PSCell configurations by the Rel-17 CPC and discard the PSCell configurations by the Rel-16 CPC that may not be configured.

Therefore, even in an environment where the Rel-16 CPC and Rel-17 CPC coexist, the UE 200 can configure, evaluate, and perform a CPC without causing a configuration failure due to exceeding the capability.

In addition, in the case of Operation Example 2, since the MN apprehends an SN load status in the vicinity, the MN-initiated conditional PSCell change of the Rel-17 CPC can be used for the purpose of a load balancer. By giving priority to the Rel-17 CPC over the Rel-16 CPC, PSCell selection can be optimized for the entire network.

### (5) Other embodiments

Although the embodiment has been described above, it is obvious to those skilled in the art that the present invention is not limited to the description of the embodiment and that various modifications and improvements thereof are possible.

For example, in the above described embodiment, EN-DC in which the MN is an eNB and the SN is a gNB has been described as an example, but as described above, another DC may be used. Specifically, the following may be used: NR-DC in which the MN is a gNB and the SN is a gNB, or NE-DC in which the MN is a gNB and the SN is an eNB.

Further, in the above-described embodiment, the conditional PSCell addition/change has been mainly described as an example, but the same operation as in the above-described operation examples may be applied to Conditional Handover (CHO) or Conditional SCG change.

In addition, in the above description, the terms configure, activate, update, indicate, enable, specify, and select may be interchangeably read. Similarly, link, associate, correspond, and map may be interchangeably read, and allocate, assign, monitor, and map may be also interchangeably read.

In addition, specific, dedicated, UE-specific, and UE-dedicated may be interchangeably read. Similarly, common, shared, group-common, UE-common, and UE-shared may be interchangeably read.

The block diagram (Figs.2 and 3) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

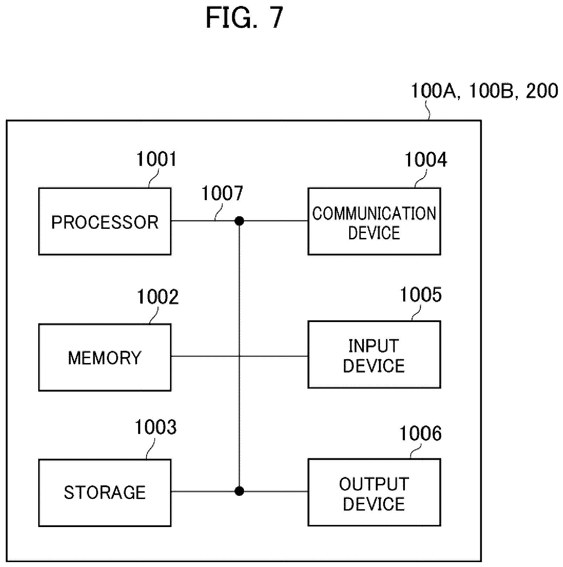

Further, the above-described eNB 100A, gNB 100B and UE 200 (the devices) may function as a computer that performs processing of a radio communication method of the present disclosure. Fig. 7 is a diagram illustrating an example of a hardware configuration of the device. As illustrated in Fig. 7, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (see Figs.2 and 3) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (Remote Radio Head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station. A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, SubCarrier Spacing (SCS), bandwidth, symbol length, cyclic prefix length, Transmission Time Interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a Physical Resource Block (PRB), a Sub-Carrier Group (SCG), a Resource Element Group (REG), a PRB pair, a RB pair, and the like.

A resource block may be configured by one or more Resource Elements (REs). For example, one RE may be a radio resource domain of one subcarrier and one symbol.

A Bandwidth Part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP" .

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the Cyclic Prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A Reference Signal may be abbreviated as RS and may be called a Pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

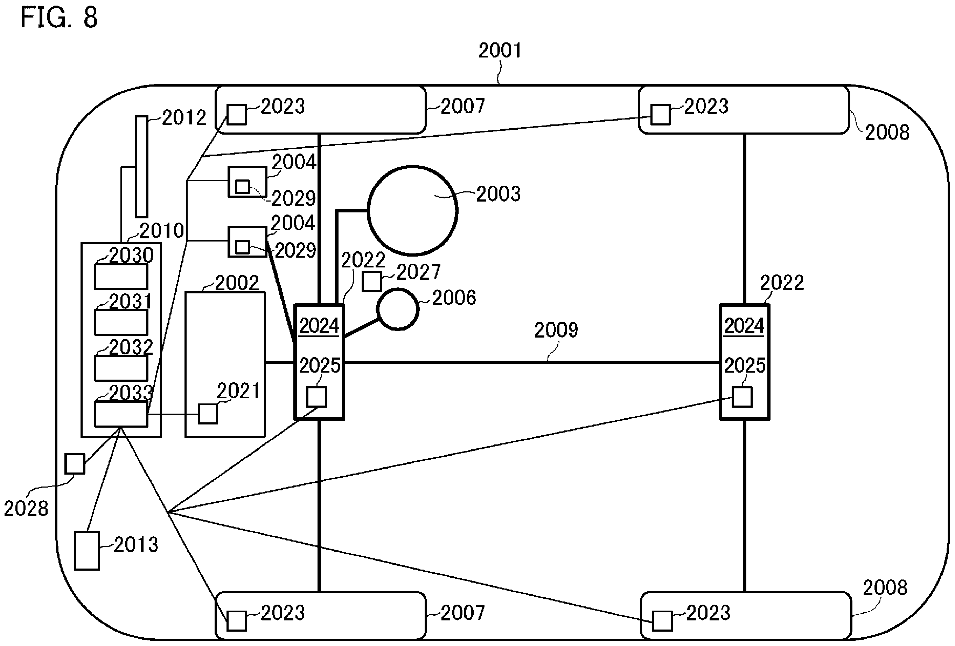

Fig. 8 shows a configuration example of a vehicle 2001. As shown in Fig 8, the vehicle 2001 includes a drive 2002, a steering 2003, an accelerator pedal 2004, a brake pedal 2005, a shift lever 2006, left and right front wheels 2007, left and right rear wheels 2008, an axle 2009, an electronic controller 2010, various sensors 2021 to 2029, an information service unit 2012, and a communication module 2013.

Examples of the drive 2002 include, an engine, a motor, and a hybrid of an engine and a motor. The steering 2003 includes at least a steering wheel (also called a handle) and steers at least one of the front and rear wheels based on an operation of a steering wheel operated by a user. The electronic controller 2010 includes a microprocessor 2031, a memory (ROM, RAM) 2032, and a communication port (IO port) 2033. The electronic controller 2010 receives signals from various sensors 2021 to 2027 provided in the vehicle. The electronic controller 2010 may be called an ECU (Electronic Control Unit).

The signals from the various sensors 2021 to 2028 include a current signal from a current sensor 2021 for sensing current of a motor, a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 includes various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to an occupant of the vehicle 1 by using information acquired from an external device through a communication module 2013 and the like.

A driver support system unit 2030 comprises various devices such as a millimeter wave radar, a Light Detection and Ranging (LiDAR), a camera, a positioning locator (for example, GNSS), map information (for example, high-definition (HD) maps, autonomous vehicle (AV) maps, and the like), a gyroscopic system (for example, an Inertial Measurement Unit (IMU), an Inertial Navigation System (INS), and the like), an Artificial Intelligence (AI) chip, and an AI processor for providing functions to prevent accidents or reduce a driving load of a driver, and one or more ECUs for controlling these devices. Further, the driver support system unit 2030 transmits and receives various kinds of information through the communication module 2013 to realize a driver support function or an automatic driving function.

The communication module 2013 can communicate with the microprocessor 2031 and components of the vehicle 1 through a communication port. For example, the communication module 2013 transmits and receives data through the communication port 2033 to and from the drive 2002, steering 2003, accelerator pedal 2004, brake pedal 2005, shift lever 2006, left and right front wheels 2007, left and right rear wheels 2008, axle 2009, microprocessor 2031 in the electronic control 2010, memory (ROM, RAM) 2032, and sensor 2021 to 2028.

The communication module 2013 is a communication device that can be controlled by the microprocessor 2031 of the electronic controller 2010 and can communicate with an external device. For example, The communication module 2013 transmits and receives various kinds of information via radio communication with the external device. The communication module 2013 may be placed inside or outside the electronic control unit 2010. Examples of the external device may include a base station, a mobile station, and the like.

The communication module 2013 transmits a current signal coming from a current sensor and input to the electronic controller 2010 to an external device via radio communication. Further, the communication module 2013 transmits a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic controller 2010 to an external device via radio communication.

The communication module 2013 receives various information (traffic information, signal information, inter-vehicle information, and the like.) transmitted from the external device and displays on the information service unit 2012 provided in the vehicle. Further, the communication module 2013 stores various information received from the external device in a memory 2032 usable by the microprocessor 2031. Based on the information stored in the memory 2032, the microprocessor 2031 may control the drive 2002, the steering 2003, the accelerator pedal 2004, the brake pedal 2005, the shift lever 2006, the left and right front wheels 2007, the left and right rear wheels 2008, the axle 2009, the sensors 2021 to 2028, and the like. provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
20 E-UTRAN
30 NG RAN
40 UPF
100A eNB
100B gNB
110 Radio communication unit
120 RRC/Xn processing unit
130 DC processing unit
140 Control unit
200 UE
210 Radio communication unit
220 RRC processing unit
230 DC processing unit
240 Control unit
1001 Processor
1002 Memory
1003 Storage
1004 Communication device
1005 Input Device
1006 Output device
1007 Bus
2001 Vehicle
2002 Drive
2003 Steering
2004 Axel pedal
2005 Brake pedal
2006 Shift lever
2007 Left and right front wheels
2008 Left and right rear wheels
2009 Axle
2010 Electronic controller
2012 Information service unit
2013 Communication module
2021 Current sensor
2022 Speed sensor
2023 Air pressure sensor
2024 Vehicle speed sensor
2025 Acceleration sensor
2026 Brake pedal sensor
2027 Shift lever sensor
2028 Object detection sensor
2029 Axel pedal sensor
2030 Operation support system
2031 Microprocessor
2032 Memory (ROM, RAM)
2033 Communication port

## Claims

1. A terminal comprising:
a control unit that controls execution of a change procedure of a secondary cell; and
a receiving unit that receives, from a first radio base station constituting a master node, a first message including a first configuration number of the secondary cell according to the change procedure, and receives, from a second radio base station constituting a secondary node, a second message including a second configuration number of the secondary cell according to the change procedure, wherein
the control unit performs the change procedure such that a configuration number of the secondary cell according to the change procedure is equal to or less than the maximum number of cells for the change procedure.

2. The terminal according to claim 1, wherein
the control unit performs the change procedure without limiting the configuration number, if a sum of the first configuration number and the second configuration number is equal to or less than the maximum number of cells.

3. The terminal according to claim 1, wherein
the control unit preferentially performs the change procedure with the master node, if a sum of the first configuration number and the second configuration number is more than the maximum number of cells.

4. A radio base station comprising:
a control unit that controls execution of a change procedure of a secondary cell; and
a transmitting unit that transmits, to another radio base station constituting a master node, a message including a configuration preparation number of the secondary cell according to the change procedure, wherein
the control unit determines the configuration preparation number based on a configuration number of the secondary cell according to the change procedure of a specific release and a configuration number of the secondary cell according to the change procedure of a release other than the specific release.

5. The radio base station according to claim 4, wherein
the control unit determines the configuration preparation number based on the maximum number of cells of the secondary cell according to the change procedure in a terminal.
